# EUROPEAN PATENT APPLICATION

(11) **EP 1 798 798 A1**
(43) Date of publication of application: **20.06.2007**
(21) Application number: 06025731.8
(22) Date of filing: 12.12.2006
(51) Int. Cl.: H01M 8/04, H02J 3/40, H02M 7/42

(54) **Power supply control apparatus and method for line connection type fuel cell system**

(30) Priority: 13.12.2005 KR 20050122717
(71) Applicant: LG Electronics Inc., Yongdungpo-gu Seoul (KR); LG Chem, Ltd., Yongdungpo-Gu Seoul (KR)
(72) Inventor: Kim, Tae-Won, Anyang, Gyeonggi-do (KR); Ko, Seung-Tae, seoul (KR)
(74) Representative: Urner, Peter

(57) **Abstract**

The present invention discloses a power supply apparatus and method for a line connection type fuel cell system. The power supply apparatus for the line connection type fuel cell system includes: a storing unit for pre-storing a normal region and a warning region according to an operating condition of a fuel cell and a correlation between an output voltage and an output current of the fuel cell; a detecting unit for detecting a common power current; and a control unit for detecting an operating point of the fuel cell, and outputting a control signal for varying the output current of the fuel cell on the basis of the position of the detected operating point and detection or non-detection of the common power current

## Description

### BACKGROUND OF THE INVENTION

### 1. Field of the Invention

The present invention relates to a fuel cell, and more particularly, to a power supply control apparatus and method for a line connection type fuel cell system which can improve operating efficiency and stability of the fuel cell system.

### 2. Description of the Background Art

In general, a fuel cell is an apparatus for directly converting energy of fuel into electric energy. In the fuel cell, an anode and a cathode are installed at both sides of a polymer electrolyte film. Electrochemical oxidation of hydrogen, which is a fuel, is generated in the anode (or oxidation electrode), and electrochemical deoxidation of oxygen, which is an oxidizing agent, is generated in the cathode (or deoxidation electrode). That is, the fuel cell generates electrons by the electrochemical oxidation and deoxidation, and generates electric energy by movement of the electrons.

Exemplary fuel cells include a phosphoric acid fuel cell, an alkaline fuel cell, a proton exchange membrane fuel cell, a molten carbonate fuel cell, a solid oxide fuel cell, and a direct methanol fuel cell. In addition, the fuel cells can be classified into a commercial fuel cell, a home fuel cell, a vehicle fuel cell for an electric vehicle, and a small-sized fuel cell for a portable terminal or a notebook computer by used fields. Especially, the home fuel cell has been improved to efficiently operate an electric home appliance or a lighting apparatus in a house, and the commercial fuel cell has been improved to efficiently operate a lighting apparatus, a motor or a machine in a shopping center or a factory.

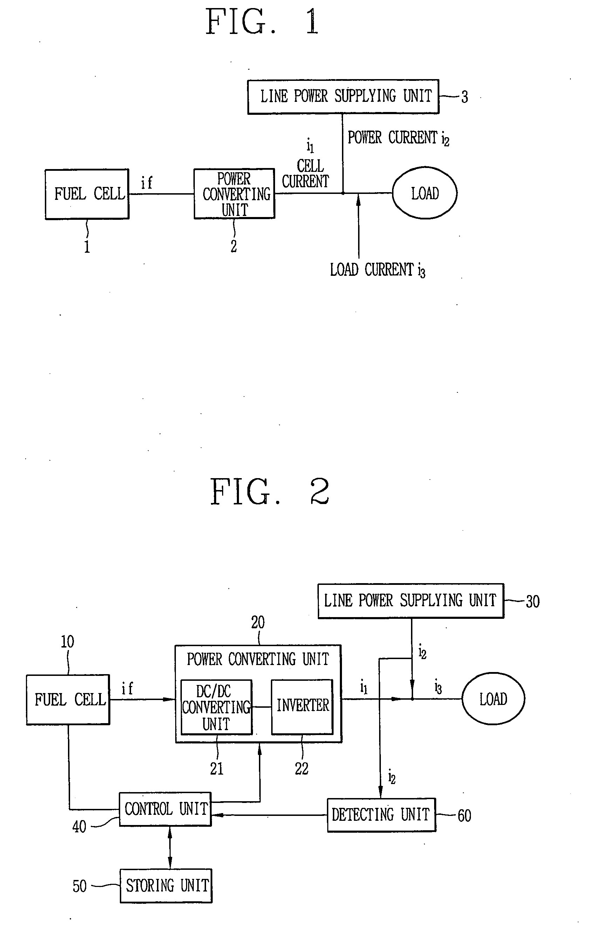

Figure 1 is a block diagram illustrating a conventional power supply apparatus for a line connection type fuel cell system. Referring to Figure 1, the conventional power supply apparatus includes a fuel cell 1, a power converting unit 2, and a line power supplying unit 3. The fuel cell 1 includes a stack (not shown) comprised of an anode and a cathode for generating electricity by electrochemical reactions of hydrogen and oxygen, and generates a DC voltage from the stack (not shown).

The power converting unit 2 includes a DC/DC converting unit (not shown) for converting the DC voltage into an AC voltage, boosting or dropping the AC voltage, rectifying the resulting voltage, and outputting a DC voltage. The power converting unit 2 also includes an inverter (not shown) for converting the DC voltage from the DC/DC converting unit into an AC voltage.

The line power supplying unit 3 supplies common power to each house or public facility. That is, the fuel cell system and the line power supplying unit 3 are linked to each other, for supplying power to each house or public facility.

In the case that power generated in the fuel cell system is not sold to a public power company (line power supplying unit), a current i1 outputted from the power converting unit 2 is controlled to be equalized to a current i3 supplied to a load. Therefore, a common power current i2 outputted from the line power supplying unit 3 becomes '0', so that it cannot be supplied to the load.

When the maximum value of the current generated in the fuel cell 1 is larger than the maximum value of the current i1 generated in the power converting unit 2, the current i1 is restricted to protect the fuel cell system. That is, in the fuel cell system, a normal region is defined by a probable maximum current and a probable minimum voltage. When the fuel cell 1 is not operated in the normal region, driving of the fuel cell 1 is stopped to protect the fuel cell system. However, even if the output voltage is lower than the probable minimum voltage, the fuel cell system can be stably operated if the output current is reduced. Nevertheless, when the output voltage of the fuel cell is lower than the probable minimum voltage, driving of the fuel cell is stopped, which reduces operating efficiency of the fuel cell system.

The subject matter claimed herein is not limited to embodiments that solve any disadvantages or that operate only in environments such as those described above. Rather, this background is only provided to illustrate one exemplary technology area where some embodiments described herein may be practiced.

### SUMMARY OF THE INVENTION

The present invention provides a power supply control apparatus and method for a line connection type fuel cell system which can improve operating efficiency and stability of the fuel cell system, by presetting a normal region which is a stable operating region of a fuel cell, detecting a current operating point of the fuel cell according to an output voltage, an output current and an operating condition of the fuel cell in non-sale of the fuel cell, and automatically controlling an output current of an inverter so that the detected operating point can exist in the normal region.

To achieve these and other advantages and in accordance with embodiments of the present invention, as embodied and broadly described herein, a power supply control apparatus is provided for a line connection type fuel cell system, including: a storing unit for pre-storing a normal region and a warning region according to an operating condition of a fuel cell and a correlation between an output voltage and an output current of the fuel cell; a power converting unit for increasing or decreasing the output current from the fuel cell according to a control signal; a detecting unit for detecting a common power current; and a control unit for detecting an operating point of the fuel cell, and outputting a control signal for varying the output current of the fuel cell on the basis of the position of the detected operating point and detection or non-detection of the common power current.

Another embodiment is directed to a method for a line connection type fuel cell system, including detecting an operating point of a fuel cell and a common power current. An output current of the fuel cell is varied on the basis of the position of the detected operating point and detection or non-detection of the common power current.

This Summary is provided to introduce a selection of concepts in a simplified form that are further described below in the Detailed Description. This Summary is not intended to identify key features or essential characteristics of the claimed subject matter, nor is it intended to be used as an aid in determining the scope of the claimed subject matter.

Additional features will be set forth in the description which follows, and in part will be obvious from the description, or may be learned by the practice of the teachings herein. Features of the invention may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram illustrating a conventional power supply apparatus for a fuel cell system;
Figure 2 is a block diagram illustrating a power supply control apparatus for a fuel cell system in accordance with the present invention;
Figure 3 is a graph showing a correlation between an output voltage and an output current of a fuel cell in Figure 2; and
Figure 4 is a flowchart showing sequential steps of a power supply control method for a fuel cell system in accordance with the present invention.

### DETAILED DESCRIPTION OF THE INVENTION

Reference will now be made in detail to the accompanying drawings which form a part hereof, and in which are shown by way of illustration specific embodiments in which the invention may be practiced. It is to be understood that other embodiments may be utilized and structural changes may be made without departing from the scope of the present invention.

Embodiments of the present invention relate to a power supply control apparatus and method for a line connection type fuel cell system which can improve operating efficiency and stability of the fuel cell system by varying an output voltage of a fuel cell by automatically controlling an output current of an inverter in non-sale of the fuel cell will.

Figure 2 is a block diagram illustrating the power supply control apparatus for the line connection type fuel cell system in accordance with the present invention. As illustrated in Figure 2, the power supply control apparatus may include a fuel cell 10, a power converting unit 20, a line power supplying unit 30, a control unit 40, a storing unit 50 and a detecting unit 60. The fuel cell 10 includes a stack (not shown) comprised of an anode and a cathode for generating electricity by electrochemical reactions of hydrogen and oxygen, and generates a DC voltage from the stack (not shown). The power converting unit 20 converts the DC voltage from the fuel cell 10 into a predetermined level AC voltage and outputs the AC voltage. In one embodiment, the power converting unit 20 includes a DC/DC converting unit 21 and an inverter 22.

In one embodiment, the DC/DC converting unit 21 converts the DC voltage into an AC voltage, boosts or drops the AC voltage, rectifies the resulting voltage, and outputs a DC voltage. The inverter 22 converts the DC voltage from the DC/DC converting unit 21 into an AC voltage according to a control signal, and outputs the AC voltage. In accordance with the present invention, the inverter 22 varies an output current according to a control signal, thereby preventing a current i1 generated in the fuel cell system from being supplied to the line power supplying unit 30. That is, the inverter 22 controls the current i1 of the output terminal of the fuel cell system to prevent the current from flowing into the line power supplying unit 30.

The line power supplying unit 30 supplies common power to each house or public facility. The detecting unit 60 detects a common power current i2 outputted from the line power supplying unit 30. In one embodiment, the storing unit 50 presets and pre-stores a normal region which is a stable operating region of the fuel cell 10. The storing unit 50 may also pre-store a warning region. The warning region may be determined by using load characteristic curves by an operating condition of the fuel cell 10 and a correlation between an output voltage and an output current of the fuel cell 10.

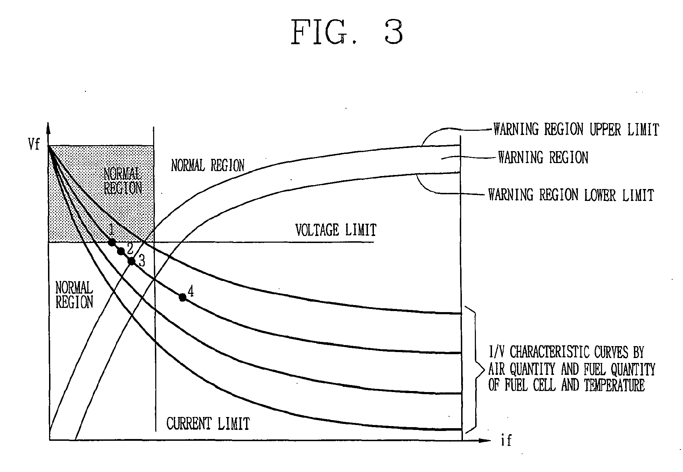

As shown in Figure 3, the normal region and the warning region may be set on the basis of characteristic curves by the operating condition, the output current and the output voltage of the fuel cell 10 and preset load corresponding curves. The control unit 40 detects an operating point of the fuel cell 10, and outputs a control signal for varying the output current of the fuel cell 10 on the basis of the position of the detected operating point and detection or non-detection of the common power current i2. That is, when the operating point of the fuel cell 10 exists in the normal region, the control unit 40 may increase or decrease the output current i1 of the fuel cell 10 according to detection or non-detection of the common power current i2.

When the operating point of the fuel cell 10 exists in the normal region, if the common power current i2 is not detected by the detecting unit 60, the control unit 40 may decrease the output current of the inverter 22. Conversely, if the common power current i2 is detected, the control unit 40 may increase the output current of the inverter 22.

When the operating point of the fuel cell 10 exists in the warning region, the control unit 40 decreases the output current of the fuel cell 10. In one embodiment, this is accomplished by decreasing the output current i1 of the inverter 22. When the detected operating point does not exist in the normal region or the warning region, the control unit 40 stops, i.e., disables, the fuel cell system.

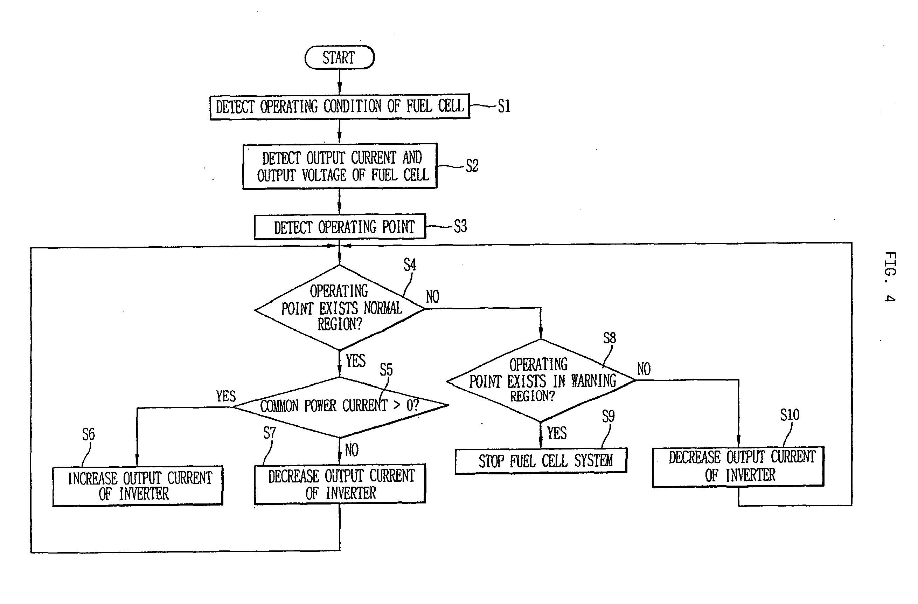

Figure 4 illustrates one embodiment of a method of operating a power supply apparatus for the line connection type fuel cell system in accordance with the present invention. The storing unit 50 presets and pre-stores the normal region which is a stable operating region of the fuel cell 10 and the warning region on the basis of the characteristic curves by the operating condition of the fuel cell 10 and the correlation between the output voltage and the output current of the fuel cell 10, and the load corresponding curves, as illustrated in Figure 3. The operating condition may include an air quantity and a fuel quantity supplied to the fuel cell 10, and an external temperature.

In this state, the stack (not shown) of the fuel cell 10, including the anode and the cathode, generates electricity by electrochemical reactions of hydrogen and oxygen, and applies a resulting DC voltage to the DC/DC converting unit 21 of the power converting unit 20. The DC/DC converting unit 21 converts the DC voltage from the fuel cell 10 into an AC voltage, boosts or drops the AC voltage, rectifies the boosted or dropped AC voltage into a DC voltage, and applies the DC voltage to the inverter 22. The inverter 22 converts the DC voltage from the DC/DC converting unit 21 into a predetermined level AC voltage according to the control signal, and outputs the AC voltage.

The control unit 40 detects the operating condition, the output current and the output voltage of the fuel cell 10 (S1 and S2), and detects the current operating point of the fuel cell 10 by using the detected operating condition, output current and output voltage (S3). The control unit 40 determines whether the detected operating point exists in the normal region (S4).

According to the determination results (S4 and S8), when the detected operating point does not exist in the normal region or the warning region, the control unit 40 decreases the output current of the fuel cell 10, for example, by decreasing the output current of the inverter (S10). For example, the control unit 40 may decrease the output current of the inverter 22 until the detected operating point exists in the normal region.

According to the determination results (S4 and S8), when the detected operating point does not exist in the normal region, but does exist in the warning region (S8), the control unit 40 stops or disables the operation of the fuel cell system (S9).

On the other hand, when the detected operating point exists in the normal region, the control unit 40 determines whether the common power current i2 has been detected by the detecting unit 60 (S5), and increases or decreases the output current i1 of the inverter 22 of the fuel cell 10 (S6 and S7) according to the decision result (S5).

When the common power current i2 has been detected by the detecting unit 60 (S5), the control unit 40 increases the output current i1 of the inverter 22 of the fuel cell 10 (S6). For example, since the output voltage of the fuel cell system cannot be sold to a customer, the output current of the fuel cell system is not supplied to the line power supplying unit 30.

Conversely, when the common power current i2 has not been detected by the detecting unit 60 (S5), the control unit 40 decreases the output current i1 of the inverter 22 of the fuel cell 10 (S7).

Referring again to Figure 3, the power supply method for the line connection type fuel cell system in accordance with the present invention will now be explained in further detail.

When the fuel cell 10 is operating at the point labeled '2', the control unit 40 of a conventional power supply may typically operate the fuel cell 10 at the point labeled '1', or may stop the fuel cell 10 by low voltage trip. However, in accordance with the present invention, the control unit 40 normally operates the fuel cell 10 in '2' because the operating point of the fuel cell 10 exists in the normal region.

As discussed earlier, in accordance with the present invention, the power supply control apparatus for the line connection type fuel cell system presets the normal region which is a stable operating region of the fuel cell, detects the current operating point of the fuel cell according to the output voltage, the output current and the operating condition of the fuel cell in non-sale of the fuel cell, and automatically controls the output current of the inverter so that the detected operating point can exist in the normal region. As a result, operating efficiency and reliability of the fuel cell system can be improved.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A power supply apparatus for a line connection type fuel cell system, comprising:
a storing unit for pre-storing a normal region and a warning region according to an operating condition of a fuel cell and a correlation between an output voltage and an output current of the fuel cell;
a detecting unit for detecting a common power current; and
a control unit for detecting an operating point of the fuel cell, and outputting a control signal for varying the output current of the fuel cell on the basis of the position of the detected operating point and detection or non-detection of the common power current.

2. The power supply apparatus as claimed in claim 1, wherein, when the operating point exists in the normal region, the control unit increases or decreases the output current of the fuel cell according to detection or non-detection of the common power current.

3. The power supply apparatus as claimed in claim 1, wherein, when the common power current has been detected, the control unit increases an output current of an inverter.

4. The power supply apparatus as claimed in claim 1, wherein, when the common power current has not been detected, the control unit decreases an output current of an inverter.

5. The power supply apparatus as claimed in claim 1, wherein the operating condition comprises an air quantity and a fuel quantity supplied to the fuel cell, and an external temperature.

6. The power supply apparatus as claimed in claim 1, wherein the control unit detects the operating point of the fuel cell by using the operating condition, the output current and the output voltage of the fuel cell.

7. The power supply apparatus as claimed in claim 1, wherein the normal region and the warning region are set on the basis of characteristic curves by the operating condition, the output current and the output voltage of the fuel cell, and preset load corresponding curves.

8. The power supply apparatus as claimed in claim 1, comprising a power converting unit for increasing or decreasing the output current of the fuel cell according to the control signal.

9. The power supply apparatus as claimed in claim 8, wherein the power converting unit comprises an inverter switched by the control signal, for increasing or decreasing the output current of the fuel cell.

10. The power supply apparatus as claimed in claim 1, wherein, when the detected operating point exists in the warning region, the control unit decreases the output current of the fuel cell.

11. The power supply apparatus as claimed in claim 1, wherein, when the detected operating point does not exist in the normal region and does exist in the warning region, the control unit stops the fuel cell system.

12. A power supply method for a line connection type fuel cell system, the method comprising:
detecting an operating point of a fuel cell and a common power current; and
varying an output current of the fuel cell on the basis of the position of the detected operating point and detection or non-detection of the common power current..

13. The power supply method as claimed in claim 12, wherein detecting the operating point further comprises:
detecting an operating condition of the fuel cell;
detecting an output current and an output voltage of the fuel cell; and
detecting the operating point of the fuel cell by using the output current, the output voltage and the operating condition of the fuel cell.

14. The power supply method as claimed in claim 13, wherein the operating condition comprises an air quantity and a fuel quantity supplied to the fuel cell, and an external temperature.

15. The power supply method as claimed in claim 12, wherein varying the output current of the fuel cell further comprises:
varying the output current of the fuel cell according to detection or non-detection of the common power current, when the operating point of the fuel cell exists in a normal region.

16. The power supply method as claimed in claim 15, wherein varying the output current of the fuel cell further comprises:
increasing an output current of an inverter, when the common power current has been detected.

17. The power supply method as claimed in claim 15, wherein varying the output current of the fuel cell further comprises:
decreasing the output current of an inverter, when the common power current has not been detected.

18. The power supply method as claimed in claim 12, wherein varying the output current of the fuel cell further comprises:
decreasing the output current of an inverter, when the detected operating point exists in a warning region.

19. The power supply method as claimed in claim 12, wherein varying the output current of the fuel cell further comprises:
stopping the fuel cell system, when the detected operating point does not exist in a normal region and does exist in a warning region.

20. The power supply method as claimed in claim 12, further comprising:
presetting a normal region and a warning region on the basis of characteristic curves by the operating condition, the output current and the output voltage of the fuel cell, and preset load corresponding curves.
